(19) Europäisches Patentamt
European Patent Office
Office européen des brevets

(11) Veröffentlichungsnummer: **0 027 870**
**B1**

(12) # EUROPÄISCHE PATENTSCHRIFT

(45) Veröffentlichungstag der Patentschrift: **15.06.83**

(51) Int. Cl.³: **C 09 K 5/00,** C 23 F 11/16

(21) Anmeldenummer: **80105051.9**

(22) Anmeldetag: **26.08.80**

(54) **Kavitationshemmende, frostsichere Kühl- bzw. Wärmeübertragungsflüssigkeiten sowie Verwendung eines kavitationshemmenden Zusatzes in frostsicheren Kühl- bzw. Wärmeübertragungsflüssigkeiten.**

(30) Priorität: **24.10.79 DE 2942903**

(43) Veröffentlichungstag der Anmeldung: **06.05.81 Patentblatt 81/18**

(45) Bekanntmachung des Hinweises auf die Patenterteilung: **15.06.83 Patentblatt 83/24**

(84) Benannte Vertragsstaaten: **AT BE CH FR GB IT LI NL SE**

(56) Entgegenhaltungen:
**AT-B-275 996**
**AT-B-276 897**
**AT-B-313 856**
**DE-A-2 158 796**
**DE-A-2 711 056**
**GB-A-1 553 156**
**US-A-4 976 501**
**US-A-4 138 353**

(73) Patentinhaber: **CHEMISCHE WERKE HÜLS AG, Postfach 1320, D-4370 Marl 1 (DE)**

(72) Erfinder: **Diebel, Klaus, Dr., Am Alten Sportplatz 17 a, D-4370 Marl (DE)**

**EP 0 027 870 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Kavitationshemmende, frostsichere Kühl- bzw. Wärmeübertragungsflüssigkeiten sowie Verwendung eines kavitationshemmenden Zusatzes in frostsicheren Kühl- bzw. Wärmeübertragungsflüssigkeiten

Die metallischen Werkstoffe industrieller Kühl- bzw. Wärmeübertragungssysteme, insbesondere in Verbrennungsmotoren, unterliegen beim Einsatz wäßriger, glykolhaltiger Medien chemischen und mechanischen Beanspruchungen, die zu mehr oder weniger starken Werkstoffschäden, d. h. Korrosion und Kavitation führen. Der Grad der Schädigung hängt von der Qualität der Metalle, der Kühlflüssigkeit, der Wärmeübertragungsflüssigkeit sowie von den äußeren Bedingungen des Kühlkreislaufs ab. Die Materialschäden können durch Zusatz geeigneter Inhibitoren zu den funktionalen Flüssigkeiten wirksam bekämpft und vermindert, aber nur in den seltensten Fällen vollständig unterbunden werden. Als Korrosionsschutzmittel kommen bevorzugt Benzoate, Borax, Nitrite, gelegentlich auch Phosphate zum Einsatz. Die Wirkung der Inhibitoren ist spezifisch und bleibt in der Regel auf eine Metallgruppe bei Anwendung innerhalb eines begrenzten Konzentrationsbereichs beschränkt. Unter erhöhter Beanspruchung der Metalle, z. B. durch Kavitation, können die Inhibitoren unter Umständen ihre gute Schutzwirkung wieder verlieren und zu verstärkter Schädigung der Werkstoffe führen. Die Schädigung einzelner Metalle, z. B. Aluminium, kann dabei höhere Werte annehmen, als in Abwesenheit sämtlicher Inhibitoranteile.

Kavitationsschäden sind infolge konstruktiver Gegebenheiten überwiegend an Bauteilen aus Guß und Aluminium d. h. an den Pumpen, zu beobachten. Sie treten bevorzugt in Kühlsystemen für Verbrennungsmotoren auf. Gefährdet sind neben der Wasserpumpe die Zylinderlaufbüchsen, Teile des Kurbelgehäuses, Kühler u. a. Guß und Aluminium mit seinen Legierungen sind somit vorrangig gegen Kavitation zu schützen. Die Korrosionsschutzadditive sind dazu nur in Ausnahmefällen geeignet.

Borat-Nitrit-Gemische zeigen in Wasser gegenüber Grauguß einen kavitationshemmenden Effekt. in Glykol-Wasser-Gemischen führt diese Inhibitorkombination jedoch zu erhöhten Abträgen an Aluminium. Die Inhibierung mit Natriumbenzoat und Natriumnitrit oder Natriumnitrat liefert ebenfalls noch unzulässig hohe Kavitationsabträge an Aluminium und dessen Legierungen. Diese Formulierungen sind darüber hinaus empfindlich gegenüber einzelnen Chemikalien, wie beispielsweise Natriumcarbonat, die häufig zur Einstellung einer Mindestalkalität der Kühlmedien und zum Schutz gegen Übersäuerung verwendet werden.

Kavitationshemmende Kühlflüssigkeiten für Dieselmotoren sind bereits bekannt aus DE-ASS 1 239 137 und 1 263 398. Sie enthalten Polyalkylenglykole oder Polyoxethylate von Alkoholen, Carbonsäuren oder Carbonsäureamiden. Auch kavitationshemmende Kühlflüssigkeiten für Verbrennungsmotoren sind aus DE-AS 1 239 138 bereits bekannt. Diese enthalten Polyvinylpyrrolidon.

Die Zusätze des Standes der Technik wirken jedoch nur auf Grauguß, und auch dort nur bei Anwendung in vergleichsweise hohen Konzentrationen (0,1 bis 5 Gewichtsprozent). Gegenüber Aluminium sind diese Zusätze praktisch unwirksam, wie im folgenden durch Vergleichsversuche ausgewiesen wird (Tabelle 1). Dabei ist aber zu bedenken, daß durch vermehrten Einsatz von Aluminium und Al-Legierungen im Motorenbau und in Wärmeübertragungs-(Solar-)anlagen die vordringliche Aufgabe besteht, den Kavitationsschutz diesen Leichtmetallen gegenüber zu verbessern.

Es wurden nun kavitationshemmende, frostsichere Kühl- bzw. Wärmeübertragungsflüssigkeiten gefunden, bestehend aus Lösungen von Glykolen in Wasser, mit einem Gehalt an üblichen Korrosionsinhibitoren, die dadurch gekennzeichnet sind, daß sie 0,005 bis 0,2 Gewichtsprozent, bezogen auf den Glykolanteil der Kühlflüssigkeit, mindestens einer Phosphonsäure der allgemeinen Formel

$$H_2O_3P-R-PO_3H_2 \qquad (I)$$

in der R=Arylen oder Alkylen mit bis zu 6 C-Atomen, gegebenenfalls substituiert durch eine oder mehrere Hydroxyl-, Amino- oder $PO_3H_2$-Gruppen, bedeutet oder

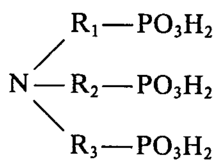

(II)

in der $R_1$, $R_2$ und $R_3$ für Alkylengruppen und $R_3$ auch für die Gruppen

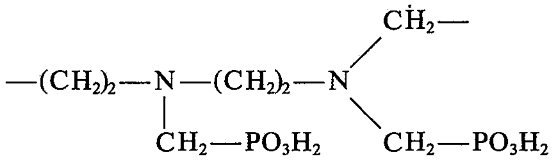

und

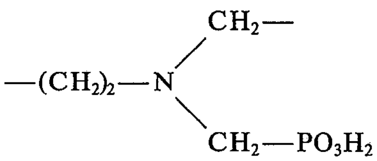

stehen, enthalten.

Vorzugsweise enthalten die kavitationshemmenden Kühlflüssigkeiten 0,01 bis 0,06 Gewichtsprozent der Phosphonsäure.

In einer speziellen Ausführungsform der Erfindung enthalten die kavitationshemmenden Kühlflüssigkeiten als Phosphonsäure die Aminotris-(methylenphosphonsäure).

Die Phosphonsäuren zeigen bereits in einer für Inhibitoren ungewöhnlich niedrigen Konzentration unterhalb von 0,05 Gewichtsprozent, bezogen auf den Glykolanteil der Flüssigkeiten, optimale Schutzwirkungen.

Wie die nachfolgenden Beispiele zeigen, ermöglichen die erfindungsgemäßen Kühlflüssigkeiten eine Verminderung der Kavitation um 20 bis 55%.

Beispiele für Phosphonsäuren, welche die erfindungsgemäßen kavitationshemmenden Kühl- und Wärmeübertragungsflüssigkeiten enthalten können, sind:

zu I: Tetramethylen-1,4-diphosphonsäure
Hexamethylen-1,6-diphosphonsäure
Benzol-1,4-diphosphonsäure
1-Hydroxiethan-1,1-diphosphonsäure
1-Hydroxipropan-1,1-diphosphonsäure
Aminomethan-1,1-diphosphonsäure
Aminoethan-1,1-diphosphonsäure
Aminobutan-1,1-diphosphonsäure

zu II: Aminotris-(methylenphosphonsäure)
Ethylendiaminotetra-(methylenphosphonsäure)
Diethylentriaminpenta-(methylenphosphonsäure)

Diese Verbindungen können nach allgemein bekannten Verfahren, wie sie u. a. in Houben-Weyl, Methoden der organischen Chemie, Band 12/1 (1963), beschrieben sind, hergestellt werden.

Als Glykole in den Glykol-Wasser-Mischungen kommen vor allem Ethylenglykol und Propylenglykol zum Einsatz. Es können darüber hinaus auch höhere Glykole, wie beispielsweise Diethylen- oder Dipropylenglykol, verwendet werden. Die Glykole können einzeln oder als Substanzgemisch eingesetzt werden. Man wird sie in den üblichen Konzentrationen von 10 bis 60 Gewichtsprozent, bezogen auf den Glykolanteil der Flüssigkeit, anwenden.

Als Korrosionsschutzmittel kommen die an sich bekannten und gängigen Verbindungen, wie Na-Benzoat, Borax, Na-Nitrit, Na-Phosphate, Na-Carbonat, Na-Nitrat, Na-Silikat, sowie organische Stickstoff- oder Schwefelverbindungen in der für diese Substanzen üblichen Kombinationsbreite und in den üblichen Mengen zum Einsatz.

Besonders empfehlenswerte Korrosionsschutzmittel-Rezepturen sind die folgenden: Natriumbenzoat (2 bis 3%), Borax (0,5 bis 2%), Natriumnitrit (0,1 bis 0,5%), Natriumnitrat (0,1 bis 0,5%) sowie Natriumsilikat (0,05 bis 0,2%) und ein Buntmetallschutzinhibitor.

Die Bestimmung der Kavitationsabträge erfolgte gemäß den Richtlinien des standardisierten Prüfverfahrens der Forschungsvereinigung für Verbrennungskraftmaschinen e. V. (Heft R 315), 1977) mit einem Ultraschall-Schwinggerät. Als Testwerkstoff wurde die Al-Legierung AlCuMg2 eingesetzt.

Die erfindungsgemäßen Zusätze bewirken in sämtlichen marktgängigen, auf die unterschiedlichsten Schwerpunkte ausgerichteten Produkten deutliche kavitationsmindernde Effekte zwischen 22 und 70%, d. h. die Phosphonsäuren verbessern in sehr geringen Konzentrationen die Kavitationsabträge guter Formulierungen und reduzieren die Abtragsmenge gängiger Rezepturen auf die Werte einer guten Formulierung.

Tabelle 1

Kavitationsprüfung:

| | | | |
|---|---|---|---|
| Frequenz | 20 kHz | Prüfkörper | AlCuMg2 |
| Schwingungsamplitude | 20 µm | Wasserhärte | 10° dGH |
| Prüftemperatur | 80°C | | |

| | Formulierung | | | | | | | |
|---|---|---|---|---|---|---|---|---|
| | 1 | 2 | 3 | 4 | 5 | 6 | 7 | 8 |
| Aminotris-(methylenphosphonsäure), % | – | 0,01 | – | – | 0,01 | – | – | – |
| Hydroxiethan-1,1-diphosphonsäure, % | – | – | 0,01 | – | – | – | – | 0,01 |
| Natriumbenzoat, % | 2,5 | 2,5 | 2,5 | 2,5 | 2,5 | 2,5 | 2,5 | 2,5 |
| Borax, % | 2 | 2 | 2 | – | – | – | – | – |
| Natriumnitrit, % | 0,2 | 0,2 | 0,2 | 0,3 | 0,3 | 0,3 | 0,3 | 0,3 |
| Natriumnitrat, % | – | – | – | – | – | – | – | – |
| Natriumcarbonat, % | – | – | – | 0,4 | 0,4 | 0,4 | 0,4 | 0,4 |
| Buntmetallschutz, % | – | – | – | – | – | – | – | – |
| Polyethylenglykol 1000, % | – | – | – | – | – | 1 | – | – |
| Polypropylenglykol 1000, % | – | – | – | – | – | – | 1 | – |
| Testergebnis | | | | | | | | |
| 20%ige wäßrige Lösung**) | | | | | | | | |
| Abtragsmenge (mg/h) | 26 | 10,5 | 12 | 106 | 50 | 166 | 125 | 76 |
| Prüfkörper*) | s | h | l | s | h | s | s | d |
| 10%ige wäßrige Lösung**) | | | | | | | | |
| Abtragsmenge (mg/h) | 51 | 24 | | | | | | |
| Prüfkörper*) | s | l | | | | | | |

Tabelle 2

Kavitationsprüfung:

| | | | |
|---|---|---|---|
| Frequenz | 20 kHz | Prüfkörper | AlCuMg2 |
| Schwingungsamplitude | 20 μm | Wasserhärte | 10° dGH |
| Prüftemperatur | 80°C | | |

| | Formulierung | | | | | | | | |
|---|---|---|---|---|---|---|---|---|---|
| | 9 | 10 | 11 | 12 | 13 | 14 | 15 | 16 | 17 |
| Aminotris-(methylenphosphonsäure), % | – | 0,01 | 0,01 | – | 0,01 | – | – | 0,01 | – |
| Hydroxiethan-1,1-diphosphonsäure, % | – | – | – | – | – | 0,01 | – | – | 0,01 |
| Natriumbenzoat, % | 2,5 | 2,5 | 2,5 | 2,5 | 2,5 | 2,5 | 2,5 | 2,5 | 2,5 |
| Borax, % | 2 | 2 | 2 | 2 | 2 | 2 | 2 | 2 | 2 |
| Natriumnitrit, % | – | – | – | – | – | – | 0,2 | 0,2 | 0,2 |
| Natriumnitrat, % | 0,3 | 0,3 | 0,3 | 0,3 | 0,3 | 0,3 | 0,2 | 0,2 | 0,2 |
| Natriumcarbonat, % | – | – | 0,1 | – | – | – | – | – | – |
| Natriumsilikat, % | – | – | – | – | – | – | 0,05 | 0,05 | 0,05 |
| Buntmetallschutz, % | – | – | 0,1 | 0,15 | 0,15 | 0,15 | 0,1 | 0,1 | 0,1 |
| Testergebnis | | | | | | | | | |
| 20%ige wäßrige Lösung**) | | | | | | | | | |
| Abtragsmenge (mg/h) | 27 | 14 | 13,5 | 26 | 14 | 14,5 | 14 | 9,5 | 11 |
| Prüfkörper*) | d | h | h | d | h | l | d | l | d |
| 10%ige wäßrige Lösung**) | | | | | | | | | |
| Abtragsmenge (mg/h) | | | | | | | 13,5 | 12 | 11 |
| Prüfköper*) | | | | | | | s | d | s |

Zu den Tabellen 1 und 2:

*) Der visuelle Befund der Prüfkörper wurde durch folgende Symbole festgelegt:

h = hell, farblich unverändert

l = leichte Anlaufflecken

d = dunkel angelaufen

s = schwarz

**) von inhibiertem Ethylenglykol

**Patentansprüche**

1. Kavitationshemmende, frostsichere Kühl- bzw. Wärmeübertragungsflüssigkeiten, bestehend aus Lösungen von Glykolen in Wasser, mit einem Gehalt an üblichen Korrosionsinhibitoren, dadurch gekennzeichnet, daß sie 0,005 bis 0,2 Gewichtsprozent, bezogen auf den Glykolanteil in der Kühl- bzw. Wärmeübertragungsflüssigkeit, mindestens einer Phosphonsäure der allgemeinen Formel

$$H_2O_3P-R-PO_3H_2 \quad (I)$$

in der R=Arylen oder Alkylen mit bis zu 6 C-Atomen, gegebenenfalls substituiert durch eine oder mehrere Hydroxyl-, Amino-, $PO_3H_2$-Gruppen, bedeutet oder

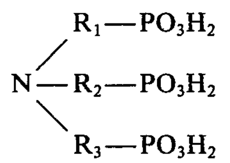

(II)

in der $R_1$, $R_2$ und $R_3$ für Alkylengruppen und $R_3$ auch für die Gruppen

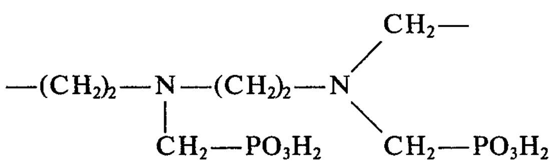

und

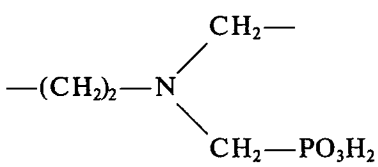

stehen, enthalten.

2. Kavitationshemmende Kühlflüssigkeiten nach Anspruch 1, dadurch gekennzeichnet, daß sie 0,01 bis 0,06 Gewichtsprozent der Phosphonsäure enthalten.

3. Kavitationskemmende Kühlflüssigkeiten nach den Ansprüchen 1 und 2, dadurch gekennzeichnet, daß sie als Phosphonsäure die Aminotris-(methylenphosphonsäure) enthalten.

4. Verwendung einer Phosphonsäure der allgemeinen Formel

$$H_2O_3P-R-PO_3H_2 \quad (I)$$

in der R=Arylen oder Alkylen mit bis zu 6 C-Atomen, gegebenenfalls substituiert durch eine oder mehrere Hydroxyl-, Amino-, $PO_3H_2$-Gruppen, bedeutet oder

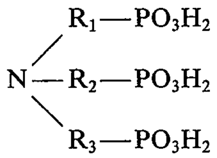 (II)

in der $R_1$, $R_2$ und $R_3$ für Alkylengruppen und $R_3$ auch für die Gruppen

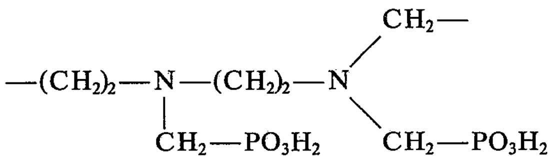

und

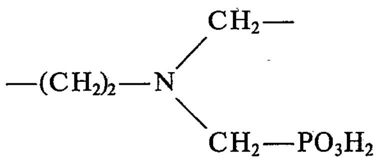

steht, als kavitationshemmender Zusatz zu frostsicheren Kühl- bzw. Wärmeübertragungsflüssigkeiten, bestehend aus Lösungen von Glykolen in Wasser mit einem Gehalt an üblichen Korrosionsinhibitoren.

## Claims

1. A cavitation-inhibiting non-freezing cooling or heat-transfer liquid comprising a solution of a glycol in water and containing a conventional corrosion inhibitor, characterised in that it contains from 0.005 to 0.2% by weight, based on the gylcol component in the cooling or heattransfer liquid, of at least one phosphonic acid of the general formula

$$H_2O_3P-R-PO_3H_2 \qquad (I)$$

in which R is arylene or alkylene of up to 6 carbon atoms, optionally substituted by one or more hydroxyl, amino or $PO_3H_2$ groups, or of the general formula

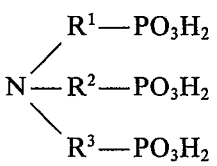 (II)

in which $R^1$, $R^2$ and $R^3$ are alkylene groups and $R^3$ can alternatively be

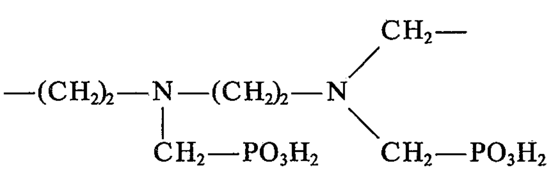

or

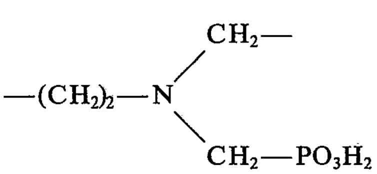

2. A cavitation-inhibiting liquid according to claim 1, characterised in that it contains from 0.01 to 0.06% by weight of the phosphonic acid.

3. A cavitation-inhibiting liquid according to claim 1 or 2, characterised in that it contains aminotris-(methylene phosphonic acid) as the phosphonic acid.

4. The use of a phosphonic acid of the general formula

$$H_2O_3P-R-PO_3H_2 \quad (I)$$

in which R is arylene or alkylene of up to 6 carbon atoms, optionally substituted by one or more hydroxyl, amino or $PO_3H_2$ groups, or of the genral formula

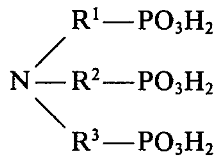

(II)

in which $R^1$, $R^2$ and $R^3$ are alkylene groups and $R^3$ can alternatively be

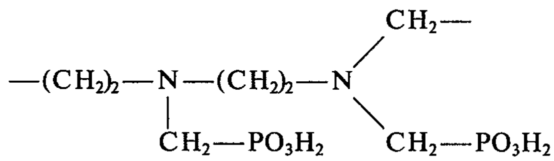

or

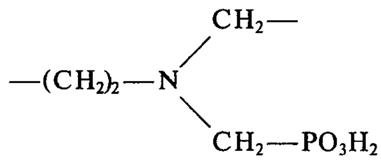

as a cavitation-inhibiting additive in non-freezing cooling and heat-transfer liquids comprising a solution of a glycol in water containing a conventional corrosion inhibitor.

**Revendications**

1. Liquides anti-gel de transfert de frigories et de calories, inhibant la cavitation et constitués par des solution aqueuses de glycols renfermant des inhibiteurs de corrosion usuels, caractérisés par le fait qu'ils renferment de 0,005 à 0,2% en poids, relativement à la fraction de glycol dans le liquide de de refroidissement, d'au moins un acide phosphonique de la formule générale

$$H_2O_3P-R-PO_3H_2 \quad (I)$$

dans laquelle R représente un reste arylène ou alkylène comportant jusqu'à 6 atomes de carbone et éventuellement substitué par un ou plusieurs groupes hydroxyle, amine, $PO_3H_2$, ou de la formule générale

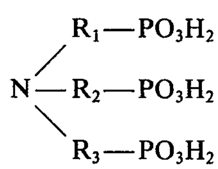

(II)

dans laquelle $R_1$, $R_2$ et $R_3$ représentent des groupes alkylène et $R_3$ peut aussi représenter les groupes

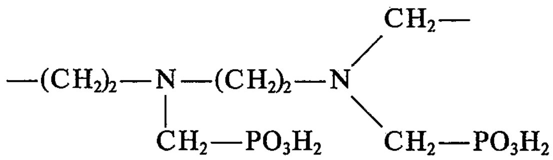

et

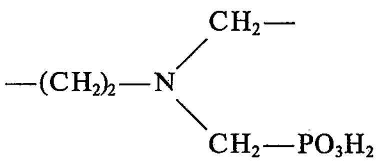

2. Liquides de refroidessement inhibant la cavitation selon la revendication 1, caractérisés par le fait qu'ils renferment de 0,001 à 0,06% en poids de l'acide phosphonique.

3. Liquides de refroidissement inhibant la cavitation selon les revendications 1 et 2, caractérisés par le fait qu'ils renferment, comme acide phosnique, l'acide amino-tris-(méthylène-phosphonique).

4. L'utilisation, en tant qu'additif (inhibant la cavitation) à des liquides anti-gel de transfert de frigories ou de calories constitués par des solutions aqueuses de glycols renfermant des inhibiteurs usuels de corrsosion, d'un acide phosphonique de la formule générale

$$H_2O_3P-R-PO_3H_2 \qquad (I)$$

dans laquelle R représente un reste arylène ou alkylène comportant jusqu'à 6 atomes de carbone et éventuellement substitué par un ou plusieurs groupes hydroxyle, amine, $PO_3H_2$, ou de la formule générale

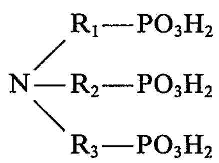

(II)

dans laquelle $R_1$, $R_2$ et $R_3$ représentent des groupes alkylène et $R_3$ peut aussi représenter les groupes

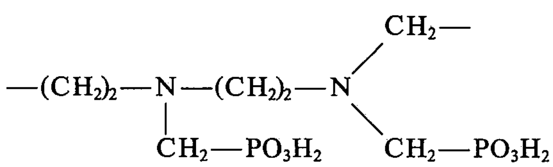

et